# EUROPÄISCHE PATENTSCHRIFT

(11) **EP 3 871 958 B1**
(45) Veröffentlichungstag und Bekanntmachung des Hinweises auf die Patenterteilung: **07.09.2022**
(21) Anmeldenummer: 20159217.7
(22) Anmeldetag: 25.02.2020
(51) Int. Cl.: B62H 5/02, B62K 3/00, B62K 15/00

(54) **DIEBSTAHLSICHERUNGSVORRICHTUNG FÜR ELEKTROROLLER**
ANTI-THEFT DEVICE FOR AN ELECTRIC ROLLER
DISPOSITIF DE SÉCURITÉ ANTIVOL POUR SCOOTERS ÉLECTRIQUES

(43) Veröffentlichungstag der Anmeldung: 01.09.2021
(73) Patentinhaber: Schnippering, Axel, 58339 Breckerfeld (DE)
(72) Erfinder: Schnippering, Axel, 58339 Breckerfeld (DE)
(74) Vertreter: Patentanwälte Dörner & Kötter PartG mbB

(56) Entgegenhaltungen:
- CN-B- 105 584 584
- CN-U- 205 396 412
- DE-C1- 4 308 296
- DE-U1-202019 100 435
- GB-A- 234 117
- US-A1- 2005 092 038
- US-A1- 2014 109 631
- US-A1- 2018 347 231
- Anonymous: "Driveman - Photos | Facebook", , 25. September 2019 (2019-09-25), XP055714842, Gefunden im Internet: URL:https://www.facebook.com/drivemanDM/ph otos/a.377664796440286/405086257031473/?ty pe=3&theater [gefunden am 2020-07-14]

## Beschreibung

Der Erfindung betrifft ein Diebstahlsicherungsvorrichtung für einen Roller, insbesondere einen Elektroroller, umfassend einen Sicherungsbügel mit zwei parallel zueinander angeordneten Schenkeln, sowie eine Haltevorrichtung, die an dem Roller benachbart zu dessen Hinterrad befestigbar ist und die zwei gegenüberliegend angeordnete Aufnahmen aufweist, in welche die beiden Schenkel einführbar sind, wobei die Aufnahmen Mittel zur formschlüssigen Verbindung mit einem eingeschobenen Schenkel aufweisen und wobei der Sicherungsbügel derart dimensioniert ist, dass er im montierten Zustand die eingeklappte Lenkstange des Rollers umgreift. US 2014/109631 A1 offenbart die Merkmale des Oberbegriffes des Anspruchs 1.

Mit einem Elektroantrieb versehene Roller, auch als E-Scooter bezeichnet, erfreuen sich zunehmender Beliebtheit. Die Fahrzeuge sind kompakt ausgestaltet und durch die Möglichkeit des Umlegens der Lenksäule platzsparend verstaubar. Die Vorteile dieser elektrisch angetriebenen Fahrzeuge gegenüber Kraftfahrzeugen sind im stadtnahen Bereich deutlich erkennbar. Sie sind umweltfreundlich und benötigen aufgrund ihres geringen Eigengewichtes wenig Energie. Außerdem ist Ihre benötigte Stellfläche um ein Vielfaches kleiner und sie sind aufgrund ihrer Zusammenfaltbarkeit einfach zu handhaben. Roller der vorgenannten Art sind beispielsweise in der EP 2 425 989 A1 beschrieben.

Nachteilig bei den vorbekannten Elektrorollern ist, dass diese hochpreisigen Fahrzeuge durch ihr geringes Eigengewicht und ihrer geringen Abmessungen einfach entwendbar sind. Zur Sicherung eines solchen Fahrzeugs sind daher zusätzliche Abschließvorrichtungen wie beispielsweise Ketten mit Vorhängeschlössern erforderlich, um das Fahrzeug an einen standortfesten Gegenstand anzuketten oder dieses in sonstiger Weise fahrunfähig zu machen.

Zur Überwindung dieser Nachteile ist in der DE 20 2019 100 435 U1 ein Elektroroller beschrieben, der eine integrierte Diebstahlsicherung aufweist. Die Diebstahlsicherung umfasst ein Bügelelement, das die Lenkstange umgreifend mit seinen freien Enden mit zwei gegenüberliegend an dem Trittelement angeordneten Aufnahmen formschlüssig verbindbar und in dieser Position über wenigstens ein Schließelement verriegelbar ist. Diese integrierte Diebstahlsicherung hat sich in der Praxis bewährt.

Aufgabe der vorliegenden Erfindung ist es, die integrierte Diebstahlsicherung für Elektroroller derart weiterzuentwickeln, dass sie nur ein geringes Gewicht aufweist und zudem nachrüstbar ist. Gemäß der Erfindung wird diese Aufgabe durch eine Diebstahlsicherungsvorrichtung mit den Merkmalen des kennzeichnenden Teils des Schutzanspruchs 1 gelöst.

Mit der Erfindung ist eine Diebstahlsicherungsvorrichtung für einen Roller, insbesondere einen Elektroroller bereitgestellt, die ein geringes Gewicht aufweist und die zudem einfach nachrüstbar ist. Dadurch, dass der Sicherungsbügel rohrförmig aus faserverstärktem Kunststoff hergestellt ist, weist er nur ein geringes Eigengewicht auf. Dadurch, dass durch den Sicherungsbügel ein Draht- oder Seilelement geführt ist, das mit Formstücken verbunden ist, die endseitig an den Schenkeln angeordnet sind, ist eine gute Sicherung gegen Durchtrennung des Sicherungsbügels erzielt. Bevorzugt ist der Bügel aus glasfaser- oder kohlefaserverstärktem Kunststoff hergestellt.

In Weiterbildung der Erfindung weist das Draht- oder Seilelement an seinen beiden Enden jeweils ein Pilzkopfelement auf, das in jeweils einem Formteil formschlüssig gehalten ist. Hierdurch ist eine einfache und zugleich robuste Verbindung des Draht- oder Seilelements mit den Formteilen erzielt. Bevorzugt ist das Draht- oder Seilelement aus schnittfestem Material, insbesondere aus Stahl oder Aramid hergestellt. Aramidfasern sind besonders widerstandsfähig gegenüber Schnittwerkzeugen. Das Draht- oder Seilelement kann auch aus einer Kombination verschiedener Materialien gebildet sein, beispielsweise in

Form eines mit Aramidfasern umwickelten Stahlseilelements.

In weiterer Ausgestaltung der Erfindung sind die Formstücke aus Kunststoff, bevorzugt aus faserverstärktem Kunststoff hergestellt. Dabei können die Formteile mit dem Sicherungsbügel verklebt oder auch einstückig mit diesem verbunden sein.

In Weiterbildung der Erfindung weisen die Formstücke jeweils wenigstens eine Ausnehmung auf, in die ein Verriegelungselement der jeweiligen Aufnahme nach Betätigung eingreift. Hierdurch ist eine formschlüssige Verbindung zwischen den Formstücken und den Aufnahmen der Haltevorrichtung erzielt. Bevorzugt sind die Verriegelungselemente jeweils Bestandteil eines angeordneten Druckschlosses.

In Ausgestaltung der Erfindung weist wenigstens eine Aufnahme zusätzlich ein Spannelement auf, mittels dessen das von der Aufnahme aufgenommene Formstück einklemmbar ist. Hierdurch ist eine zusätzliche Fixierung eines Schenkels des Sicherungsbügels in der Aufnahme ermöglicht.

Gegenstand der vorliegenden Erfindung ist weiterhin ein Roller, insbesondere Elektroroller, umfassend eine Lenkstange, die schwenkbar mit einem Trittelement verbunden ist, das zumindest heckseitig eine Schwinge aufweist und bei dem eine Diebstahlsicherung der vorstehenden Art angeordnet ist, deren Sicherungsbügel die Lenkstange umgreifend mit ihren Formstücken in die Aufnahmen eines an dem Trittelement befestigten Haltevorrichtung formschlüssig verbindbar und in dieser Position über ein Schließelement verriegelbar sind.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung einer Diebstahlsicherungsvorrichtung für einen Elektroroller;
- Figur 2: die Darstellung der Diebstahlsicherungsvorrichtung aus Figur 1 in einer Ansicht von unten;

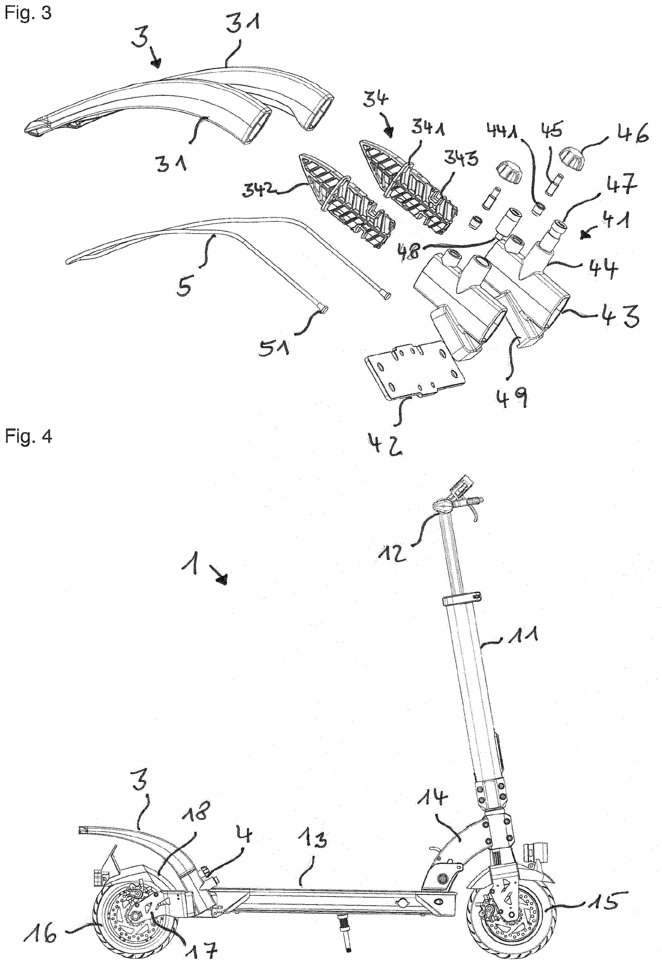

- Figur 3: die Darstellung der Diebstahlsicherungsvorrichtung aus Figur 1 in Explosionsdarstellung und
- Figur 4: die schematische Darstellung eines Elektrorollers mit angeordneter Diebstahlsicherungsvorrichtung nach Figur 1.

Der als Ausführungsbeispiel gewählte Elektroroller 1 umfasst eine Lenkstange 11 und ein Trittelement 13, die in bekannter Art und Weise über eine arretierbare Schwenkvorrichtung 14 zueinander schwenkbar miteinander verbunden sind. Die Lenkstange 11 ist zur Längenverstellung teleskopierbar ausgebildet und an einer Seite mit einem Vorderrad 15 sowie an der diesem gegenüberliegenden Seite mit einem einklappbar ausgebildeten Lenker 12 versehen. An dem Trittelement 13 ist heckseitig ein Hinterrad 16 über eine Hinterradschwinge 17 mit dem Trittelement 13 verbunden. Die Lenkstange 11 kann über die arretierbare Schwenkvorrichtung 14 in eine im Wesentlichen zum Trittelement 13 parallele Position verschwenkt werden.

An dem Trittelement 13 ist eine Diebstahlsicherungsvorrichtung 2 angeordnet, deren Sicherungsbügel 3 nach hinten hin gebogen ausgebildet ist, sodass er im Wesentlichen dem Verlauf des Schutzblechs 18 des Hinterrades 16 folgt. Die Diebstahlsicherungsvorrichtung 2 besteht im Wesentlichen aus einer Haltevorrichtung 4, an welcher der Sicherungsbügel 3 lösbar befestigt ist.

Der Sicherungsbügel 3 besteht im Wesentlichen aus zwei parallel zueinander angeordneten Schenkeln 31, die über einen Querverbinder 32 miteinander verbunden sind. Der Sicherungsbügel 3 ist in Art eines Hohlprofils ausgebildet, dessen Unterseite weitgehend offen ist. In dem hohlprofilartigen Sicherungsbügel 3 sind umlaufend Stege 33 angeordnet, die zueinander fluchtende Ausnehmungen 34 zur Aufnahme eines in dem Sicherungsbügel 3 angeordneten Drahtbügels 5 aufweisen. Endseitig ist in jedem Schenkel 31 ein Formstück 34 befestigt, das bereichsweise in den Schenkel 31 hineinragt.

Das Formstück 34 ist im Wesentlichen quaderförmig ausgebildet und weist an seinem dem jeweiligen Schenkel 31 zugewandten Ende eine Anschlagplatte 341 auf, an die sich ein Keilstück 342 anschließt. Die Außenkontur der Anschlagplatte 341 entspricht im Wesentlichen dem endseitigen Schenkelquerschnitt, an dem diese anliegt. Das Formstück 34 ist im Ausführungsbeispiel als Rippenkonstruktion im Kunststoffspritzgießverfahren hergestellt. Beabstandet zu der Anschlagplatte 341 weist das Formstück 34 an seiner dem Keilstück 342 entgegengerichteten Seite zwei diametral zueinander gegenüberliegend angeordnete Eingriffe 343 in Form einer Ausnehmung auf. Im Ausführungsbeispiel ist der Sicherungsbügel 3 mit seinen Formstücken 34 aus carbonfaserverstärktem Kunststoff hergestellt. In die Ausnehmungen 331 der Stege 33 ist der Drahtbügel 5 eingelegt, der durch den Sicherungsbügel 3 geführt ist. An seinen beiden Enden weist der Drahtbügel 5 jeweils einen Pilzkopf 51 auf, mit dem er in jeweils einem Formstück 34 formschlüssig gehalten ist.

Die Haltevorrichtung 4 besteht im Wesentlichen aus zwei parallel zueinander angeordneten Aufnahmen 41, die auf einer Halteplatte 42 befestigt sind. Die Aufnahmen 41 sind als im Wesentlichen hohlquaderförmige Profile 43 ausgebildet, die jeweils mit zwei beabstandet zueinander angeordneten, hohlzylindrischen Anformungen 44 versehen sind, die in das Profil 43 münden. Die erste, dem Sicherungsbügel 3 zugewandte Anformung 44 ist mit einer Gewindehülse 441 versehen, in die ein Gewindespannstift 45 einschraubbar ist, der hierzu endseitig mit einem Drehgriff 46 verbunden ist. In die zweite Ausformung 44 ist jeweils ein Druckschloss 47 eingebracht, das einen Riegel 48 umfasst, der in einen Eingriff 343 eines in die Aufnahme 41 eingebrachten Formstücks 34 hineinbewegbar ist. An seiner den Anformungen 44 gegenüberliegenden Seite ist an das Profil 43 ein Fußteil 49 angeformt. Die Fußteile 49 der beiden Aufnahmen 41 nehmen die Halteplatte 42 auf, über die sie miteinander verbunden sind. Die Aufnahmen 41 sind im Ausführungsbeispiel wiederum aus carbonfaserverstärktem Kunststoff hergestellt.

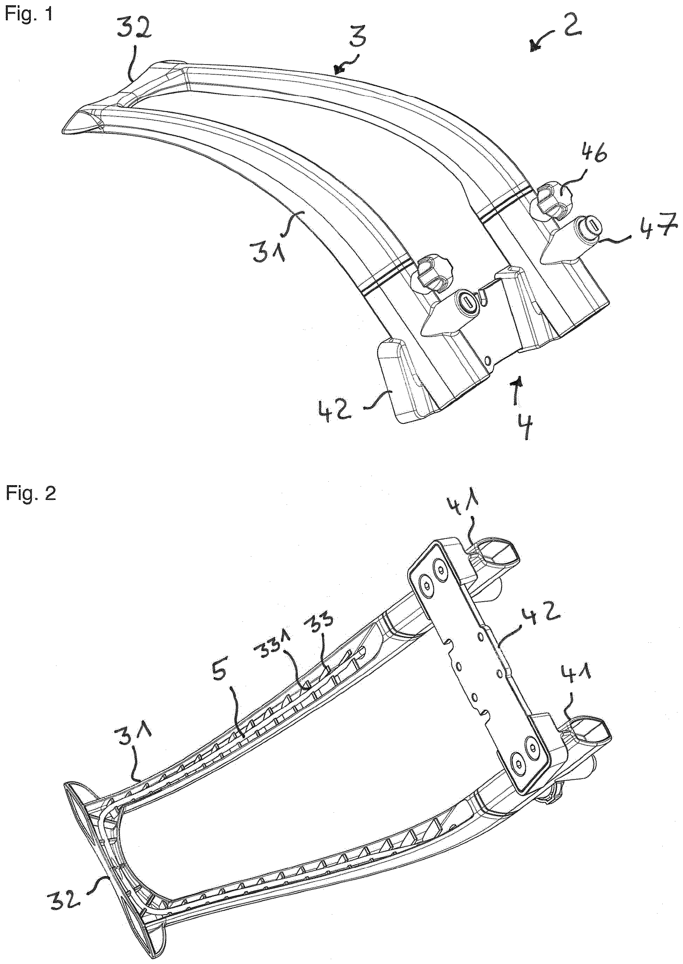

In Figur 1 ist die Diebstahlsicherungsvorrichtung 2 in geschlossenem Zustand gezeigt, wobei eines der beiden Druckschlösser 47 verschlossen ist. Die Formstücke 34 des Sicherungsbügels 3 sind in die Profile 43 der Aufnahmen 41 eingeschoben und über die jeweils mit einem Drehgriff 46 versehenen Gewindespannstifte 45 fixiert. Eines der beiden Formstücke 34 ist durch den Riegel 48 des verschlossenen Druckschlosses 47 verriegelt. In der gezeigten Anordnung befindet sich der Sicherungsbügel 3 in der "Mitführposition", in der er beabstandet zu dem Schutzblech 18 des Elektrorollers 1 dessen Kontur weitgehend folgend angestellt ist. Im zusammengelegten Zustand des Elektrorollers liegt die Lenkstange 11 in einer waagerechten, parallel zum Trittelement 13 angestellten Position. Zum Verschließen des Elektrorollers 1 wird der Sicherungsbügel 3 um 180 Grad um seine Längsachse verschwenkt mit seinen Formstücken 34 in die Aufnahmen 41 der Haltevorrichtung 4 eingesetzt, über die Drehgriffe 46 verspannt sowie über die Druckschlösser 47 verriegelt, wobei deren Riegel 48 nun in die diametral gegenüberliegend angeordneten Eingriffe 343 der Formstücke 34 hineinbewegt werden. Alternativ oder zusätzlich kann der Sicherungsbügel 3 auch an ein ortsfestes Objekt, wie beispielsweise einen Zaun- oder Laternenpfahl gelegt werden, bevor dessen Schenkel 31 mit ihren Formstücken 34 in die Aufnahme 41 der Haltevorrichtung 4 eingeschoben und nachfolgend über die Druckschlösser 47 verriegelt werden.

## Patentansprüche

1. Diebstahlsicherungsvorrichtung für einen Roller, insbesondere einen Elektroroller (1), umfassend einen Sicherungsbügel (3) mit zwei parallel zueinander angeordneten Schenkeln (31), sowie eine Haltevorrichtung (4), die an dem Roller benachbart zu dessen Hinterrad (16) befestigbar ist und die zwei gegenüberliegend angeordnete Aufnahmen (41) aufweist, in welche die beiden Schenkel (31) einführbar sind, wobei die Aufnahmen (41) Mittel zur formschlüssigen Verbindung mit einem eingeschobenen Schenkel (31) aufweisen, wobei der Sicherungsbügel (3) derart dimensioniert ist, dass er in montiertem Zustand die eingeklappte Lenkstange (11) des Rollers umgreift, wobei der Sicherungsbügel (3) hohl aus faserverstärktem Kunststoff hergestellt ist, wobei durch den Sicherungsbügel (3) ein Draht- oder Seilelement (5) geführt ist, das mit Formstücken (34) verbunden ist, die endseitig an den Schenkeln (31) angeordnet und in die Aufnahmen (41) einführbar sind, **dadurch gekennzeichnet, dass** das Draht- oder Seilelement (5) an seinen beiden Enden jeweils ein Pilzkopfelement (51) aufweist, das in jeweils einem Formteil formschlüssig gehalten ist.

2. Diebstahlsicherungsvorrichtung nach Anspruch 1, **dadurch gekennzeichnet, dass** der Sicherungsbügel (3) aus glasfaser- oder kohlefaserverstäktem Kunststoff hergestellt ist.

3. Diebstahlsicherungsvorrichtung nach einem der vorgenannten Ansprüche, **dadurch gekennzeichnet, dass** das Draht- oder Seilelement aus schnittfestem Material, insbesondere aus Stahl und/oder Aramid hergestellt ist.

4. Diebstahlsicherungsvorrichtung nach einem der vorgenannten Ansprüche, **dadurch gekennzeichnet, dass** die Formstücke (34) aus Kunststoff, bevorzugt aus faserverstärktem Kunststoff hergestellt sind.

5. Diebstahlsicherungsvorrichtung nach einem der vorgenannten Ansprüche, **dadurch gekennzeichnet, dass** die Formstücke (34) jeweils wenigstens eine Ausnehmung (343) aufweisen, in die ein Verriegelungselement der jeweiligen Aufnahme (41) nach Betätigung eingreift.

6. Diebstahlsicherungsvorrichtung nach Anspruch 5, **dadurch gekennzeichnet, dass** das Verriegelungselement Bestandteil eines angeordneten Druckschlosses (47) ist.

7. Diebstahlsicherungsvorrichtung nach Anspruch 5 oder 6, **dadurch gekennzeichnet, dass** wenigstens eine Aufnahme (41) zusätzlich ein Spannelement (45) aufweist, mittels dessen das von der Aufnahme aufgenommene Formstück (34) einklemmbar ist.

8. Roller, insbesondere Elektroroller (1), umfassend eine Lenkstange (11), die schwenkbar mit einem Trittelement (13) verbunden ist, das zumindest heckseitig eine Schwinge (17) aufweist, **dadurch gekennzeichnet, dass** eine Diebstahlsicherung (2) nach einem der Ansprüche 4 bis 6 angeordnet ist, deren Sicherungsbügel (3) die Lenkstange (11) umgreifend mit seinen Formstücken (34) mit den Aufnahmen (41) einer an dem Trittelement (13) befestigten Haltevorrichtung (4) formschlüssig verbindbar und in dieser Position über ein Schließelement verriegelbar ist.

## Claims

1. Anti-theft device for a scooter, in particular an electric scooter (1), comprising a securing bracket (3) with two legs (31) arranged in parallel with respect to each other, as well as a holding device (4), which can be attached to the scooter adjacent to the rear wheel (16) thereof and which has two oppositely arranged receptacles (41), into which the two legs (31) can be inserted, wherein the receptacles (41) have means for positive connection with an inserted leg (31), wherein the securing bracket (3) is dimensioned in such a manner that it encompasses the folded handlebar (11) of the scooter in the mounted state, wherein the securing bracket (3) is made hollow from fibre-reinforced plastic material, wherein a wire or cable element (5) is guided through the securing bracket (3), which is connected to shaped pieces (34), which are arranged at the end of the legs (31) and can be inserted into the receptacles (41), **characterised in that** the wire or cable element (5) has a mushroom head element (51) at each of its two ends, which is positively held in a respective formed part.

2. Anti-theft device according to claim 1, **characterised in that** the securing bracket (3) is made of glass fibre- or carbon fibre-reinforced plastic.

3. Anti-theft device according to one of the previous claims, **characterised in that** the wire or cable element is made of cut-resistant material, in particular of steel and/or aramid.

4. Anti-theft device according to one of the previous claims, **characterised in that** the shaped pieces (34) are made of plastic, preferably of fibre-reinforced plastic.

5. Anti-theft device according to one of the previous claims, **characterised in that** the shaped pieces (34) each have at least one recess (343), in which a locking element of the respective receptacle (41) engages after actuation.

6. Anti-theft device according to claim 5, **characterised in that** the locking element is part of an arranged pressure lock (47).

7. Anti-theft device according to claim 5 or 6, **characterised in that** at least one receptacle (41) additionally has a clamping element (45), by means of which the shaped piece (34) received by the receptacle can be clamped.

8. Scooter, in particular electric scooter (1), comprising a handlebar (11), which is pivotably connected to a tread element (13), which has a swing arm (17) at least at the rear, **characterised in that** an anti-theft device (2) according to one of claims 4 to 6 is arranged, whose securing bracket (3), encompassing the handlebar (11), can be positively connected by its shaped pieces (34) to the receptacles (41) of a holding device (4) attached to the tread element (13) and can be locked in this position via a closing element.

## Revendications

1. Dispositif antivol pour une trottinette, en particulier une trottinette électrique (1), comprenant un étrier de sécurité (3) avec deux branches (31) disposées parallèlement l'une par rapport à l'autre ainsi qu'un dispositif de retenue (4) qui peut être fixé à la trottinette près de sa roue arrière (16), et présentant deux logements (41) disposés en face, dans lesquels les deux branches (31) peuvent être insérées, sachant que les logements (41) présentent des moyens de liaison par adhérence de forme avec une branche (31) insérée, sachant que l'étrier de sécurité (3) est dimensionné de telle façon qu'une fois monté, il entoure le guidon (11) rabattu de la trottinette, sachant que l'étrier de sécurité (3) est creux et fabriqué en matière plastique renforcée par des fibres, sachant qu'un élément (5) en fil métallique ou en câble relié par des pièces façonnées (34) disposées à l'extrémité des branches (31) et pouvant être insérées dans les logements (41) est guidé à travers l'étrier de sécurité (3), **caractérisé en ce que** l'élément (5) en fil métallique ou en câble présente à chacune de ses deux extrémités un élément en forme de champignon (51) qui est respectivement maintenu par adhérence de forme dans une pièce moulée.

2. Dispositif antivol selon la revendication 1, **caractérisé en ce que** l'étrier de sécurité (3) est fabriqué en matière plastique renforcée par des fibres de verre ou de carbone.

3. Dispositif antivol selon l'une quelconque des revendications précédentes, **caractérisé en ce que** l'élément en fil métallique ou en câble est fabriqué à partir d'un matériau résistant à la coupe, en particulier en acier et/ou en Aramide.

4. Dispositif antivol selon l'une quelconque des revendications précédentes, **caractérisé en ce que** les pièces façonnées (34) sont fabriquées en matière plastique, de préférence en matière plastique renforcé par des fibres.

5. Dispositif antivol selon l'une quelconque des revendications précédentes, **caractérisé en ce que** les pièces façonnées (34) présentent respectivement au moins un évidement (343) dans lequel un élément de verrouillage du logement respectif (41) s'engrène après avoir été actionné.

6. Dispositif antivol selon la revendication 5, **caractérisé en ce que** l'élément de verrouillage fait partie d'une serrure à pression en place (47).

7. Dispositif antivol selon la revendication 5 ou 6, **caractérisé en ce qu'**au moins un logement (41) présente en plus un élément de serrage (45) au moyen duquel la pièce façonnée (34) contenue dans le logement peut être coincée.

8. Trottinette, en particulier trottinette électrique (1), comprenant un guidon (11) relié de manière à pouvoir pivoter à un plateau (13) qui présente un bras oscillant (17) au moins à l'arrière, **caractérisée en ce qu'**un dispositif antivol (2) selon l'une quelconque des revendications 4 à 6 est en place, dont l'étrier de sécurité (3), entourant le guidon (11), peut être relié par adhérence de forme avec ses pièces façonnées (34) dans les logements (41) d'un dispositif de retenue (4) fixé sur le plateau (13) et verrouillé dans cette position par le biais d'un élément de fermeture.
